# EUROPÄISCHE PATENTSCHRIFT

(11) **EP 2 535 456 B1**
(45) Veröffentlichungstag und Bekanntmachung des Hinweises auf die Patenterteilung: **18.12.2013**
(21) Anmeldenummer: 11004887.3
(22) Anmeldetag: 15.06.2011
(51) Int. Cl.: E01C 19/00, G01B 21/08, G01B 21/18

(54) **Straßenfertiger mit Schichtdickenmessvorrichtung**
Road finisher with coating measuring device
Finisseuse de route dotée d'un dispositif de mesure de l'épaisseur de couche

(43) Veröffentlichungstag der Anmeldung: 19.12.2012
(73) Patentinhaber: Joseph Vögele AG, 67067 Ludwigshafen (DE)
(72) Erfinder: Hanfland, Dennis, 68169 Mannheim (DE); Weiser, Ralf, 68526 Ladenburg (DE)
(74) Vertreter: Grünecker, Kinkeldey, Stockmair & Schwanhäusser

(56) Entgegenhaltungen:
- EP-A1- 0 510 215
- US-A- 4 571 695
- US-A- 5 201 604
- US-A1- 2010 014 916

## Beschreibung

Die vorliegende Erfindung betrifft einen Straßenfertiger gemäß dem Oberbegriff des Anspruchs 1 bzw. ein Verfahren mit den technischen Merkmalen des Anspruchs 12.

Die Dicke einer beim Bau einer Straße erzeugten Schicht soll kontinuierlich und möglichst in Echtzeit gemessen werden. Da die Anforderungen an die Genauigkeit in der Praxis relativ hoch sind, reicht es nicht aus, wenn das Planum an einer Stelle vor der Bohle aufgenommen und unmittelbar mit einer hinteren Kante der Bohle zur Dicke des erzeugten Straßenbelegs verrechnet wird, weil dadurch Unebenheiten des Planums vernachlässigt werden.

In der Praxis sind Systeme bekannt, die mittels direkter Messung die Dicke des Straßenbelags, beispielsweise mittels Ultraschall oder Radar, ermitteln. Dies hat jedoch den Nachteil, dass zu einer exakten Dickenmessung des Straßenbelags teilweise Reflektionskörper eingesetzt werden müssen, um die Grenzschicht genau lokalisieren zu können.

In einer anderen Methode zur Schichtdickenbestimmung eines neu erzeugten Straßenbelags werden Messkörper in eine neue eingebaute Schicht auf das Planum geschoben. Dadurch kann es jedoch zu erheblichen Schäden im neu aufgetragenen Belag kommen.

Ein weiterer bekannter Weg sieht eine Speicherung und Verrechnung der auf dem Planum gemessenen Werte vor, wobei eine Referenz verwendet wird, um alle Werte miteinander in Verbindung zu setzen.

In der Praxis wird die Schichtdicke auch unter Verwendung eines Neigungssensors berechnet. Dies wird beispielsweise durch die DE 100 25 462 A1 beschrieben. Diese offenbart eine Einrichtung zur Bestimmung der Schichtdicke auf der Grundlage eines vorbestimmten Abstands der Position eines Höhensensors von der Bohlenhinterkante, der erfassten Höhe über dem Untergrund und einer ermittelten Zugarmbohlenverbundneigung, welche mittels eines Neigungssensors erfasst wird.

Bei der Verwendung von Neigungssensoren besteht allerdings der technische Nachteil, dass diese anfällig auf jegliche Art von Beschleunigungen sind und daher zu einem ungenauen Meßergebnis führen. Insbesondere werden die Neigungssensoren während ihrer Messung durch Erschütterungen oder auf den Bohlenverbund übertragene Vibrationen gestört. Dabei verursachen kleine Fehler der Neigungssensoren große Fehler in der Berechnung der Schichtdicke.

Ebenfalls ist es problematisch, wenn eine große Anzahl von Abstandssensoren das Planum oberflächengetreu nachbildet, weil dabei sämtliche Meßwerte der Sensoren in Verbindung gesetzt werden müssen, um eine geeignete Referenz zu erstellen. Dieses Verfahren ist kompliziert und benötigt zusätzlich eine kostspielige Ausstattung, um die geeignete Referenz zu ermitteln.

In der Praxis werden auch externe Referenzen verwendet, um die Schichtdicke eines neu eingebauten Straßenbelags zu ermitteln. Dabei werden die externen Referenzen neben dem Straßenfertiger positioniert bzw. montiert. Dies ist jedoch nicht praktisch, da entweder die komplette Strecke zuvor mit solchen Referenzen versehen werden muss oder die Referenzen in regelmäßigen Abständen versetzt werden müssen, damit eine kontinuierliche Schichtdickenermittlung möglich ist.

Die DE 100 25 474 A1 beschreibt eine Vorrichtung zur Bestimmung der Schichtdicke eines durch einen Straßenfertiger auf einen Untergrund aufzubringenden Materialeinbaus, wobei der Straßenfertiger einen Traktor, zumindest einen an dem Traktor höhenverstellbar und drehbar angebrachten Zugarm, eine starr an dem zumindest einen Zugarm angebrachte schwimmende Bohle, die mit dem Zugarm einen Zugarm-Bohlen-Verbund bildet, und ein mit seiner Unterseite auf der Unterlage aufliegendes Fahrwerk aufweist. Ferner umfasst die Vorrichtung einen am Traktor stationär angebrachten Abstandssensor zum Erfassen eines relativen Abstands zwischen einer Bezugsposition des Traktors und einer Bezugsposition des Zugarm-Bohlen-Verbunds, wobei die Bezugsposition des Traktors eine vorbestimmte Positionsbeziehung zu der Unterseite des Fahrwerks aufweist und die Bezugsposition des Zugarm-Bohlen-Verbunds eine vorbestimmte Positionsbeziehung zu einer unteren Hinterkante der Bohle aufweist.

Die DE 198 51 153 C1 betrifft ein Verfahren zur Vermessung einer Fahrbahn, bei dem das Fahrbahnprofil meßtechnisch erfaßt wird. Unter Fahrbahn wird hierbei insbesondere eine Verkehrsfläche, z. B. eine Strasse oder eine Autobahn, verstanden, die im Rahmen von Straßenbau- oder Reparaturarbeiten mit einer Anzahl von Lagen oder Schichten errichtet wird. Die Erfindung bezieht sich weiter auf ein System zur Durchführung des Verfahrens mit einer mobilen Prüfeinrichtung.

Die EP 0 510 215 B1 beischreibt eine Vorrichtung zum Regeln einer Fahrbahnbelagdicke. Die Vorrichtung umfasst Höhensensoren und Neigungssensoren, welche allesamt derart an einem Bohlenverbund angeordnet sind, dass sie einer Bewegung der Bohle nachgehen.

Die US 7,172,363 B2 bezieht sich auf eine Pflastermaschine. Die Pflastermaschine kann eine Leistungsquelle, ein Traktionssystem, einen Fülltrichter, der konfiguriert ist, um Pflastermaterial zu enthalten, und eine oder mehrere Fördereinrichtungen aufweisen, die konfiguriert sind, um das Pflastermaterial von dem Fülltrichter zu übertragen. Die Pflastermaschine kann auch ein Schild bzw. eine Abziehbohle aufweisen, die konfiguriert ist, um eine Matte des Pflastermaterials auszulegen. Die Pflastermaschine umfasst weiter mindestens einen vorderen Sensor, der an einem Vorderteil der Pflastermaschine montiert ist und konfiguriert ist, um die Höhe von einer Oberfläche zum vorderen Sensor zu messen, und mindestens einen hinteren Sensor, der an der Pflastermaschine montiert ist und konfiguriert ist, um die Höhe von einer Oberfläche der Matte zum hinteren Sensor zu messen. Die Pflastermaschine umfasst auch eine Steuervorrichtung, die konfiguriert ist, um eine Dicke der Matte durch Bestimmung einer Differenz zwischen einer oder mehreren vorderen Höhenmessungen, die durch mindestens einen vorderen Sensor aufgenommen wurden, und einer oder mehreren hinteren Höhenmessungen zu bestimmen, die von dem mindestens einen hinteren Sensor aufgenommen wurden. Die Sensoren sind auf einem Träger befestigt, der fest mit der Bohle verbunden ist.

Obwohl die eingangs erwähnte Verwendung von Neigungssensoren nicht unproblematisch ist, wäre eine Vernachlässigung der damit erzeugten Neigungsreferenz bei einem unebenen Untergrund ebenfalls nicht angebracht, weil dadurch keine exakte Messung der Schichtdicke des Straßenbelags durchführbar ist.

Die US 2012/0014916 A1 beschreibt einen Straßenfertiger mit einer beweglichen Einbaubohle, die mittels einem Tragarm am Chassis des Straßenfertigers gelagert ist. Außerdem umfasst der Straßenfertiger eine Messvorrichtung, deren erfasste Messwerte zur Nivellierung der Einbaubohle verwendet werden.

Die US 4,571,695 A bezieht sich auf ein Fahrzeug zur Messung einer Oberflächenbeschaffenheit. Dazu ist am Fahrzeug ein Messbalken mit mehreren hintereinander angeordneten Messeinheiten vorgesehen, welche jeweils eine Abstandsmessung zum Straßenbahnbelag durchführen.

Die US 5,201,604 A offenbart einen Straßenfertiger mit einer beweglichen Einbaubohle, die über einen Tragarm mit dem Straßenfertiger beweglich verbunden ist. Der Straßenfertiger umfasst auch eine Messvorrichtung, deren Messwerte zur Generierung eines Steuersignals zum Nivellieren der Einbaubohle verwendet werden.

Die EP 0 542 297 A offenbart einen Straßenfertiger mit drei Ultraschallsensoren-Mittels der Ultraschallsensoren werden Abstände zu einer Referenzfläche erfaßt.

Der vorliegenden Erfindung liegt angesichts der durch den Stand der Technik ergebenen Probleme bzw. Nachteile die Aufgabe zugrunde, eine Schichtdicke eines neu eingebauten Straßenbelags unter Verwendung einfacher, konstruktiver technischer Merkmale möglichst genau und praktikabel zu erfassen.

Diese Aufgabe wird gelöst mit den technischen Merkmalen des Anspruchs 1 bzw. mit den technischen Merkmalen des Verfahrensanspruchs 12.

Verbesserte Weiterbildungen der Erfindung sind durch die technischen Merkmale der Unteransprüche gegeben.

Die Erfindung bezieht sich auf einen Straßenfertiger mit einer beweglichen Einbaubohle und mit einer Schichtdickenmessvorrichtung, die mindestens drei Sensoren umfasst, die in Fahrtrichtung (V) äquidistant bezüglich eines Abstands (L1) zueinander angeordnet sind, wobei einer der Sensoren ein Koordinatensystem definiert und die mindestens drei Sensoren dazu ausgebildet sind, im Intervall des Abstandes (L1) eine Abstandsmessung zum Planum durchzuführen, um eine Entfernung zwischen dem jeweiligen Sensor und einem vom Sensor erfaßten Punkt (P) auf der Oberfläche des Planums zu bestimmen und um darauf basierend eine Neigungsänderung des Koordinatensystems zur Errechnung einer Schichtdicke (11) zu ermitteln,
wobei die Schichtdickenmessvorrichtung dazu ausgebildet ist, die von dem das Koordinatensystem definierenden Sensor gemessene Entfernung zum Planum vektoriell zu verrechnen mit einer durch die Fahrt des Straßenfertigers ergebenen Relativbewegung des durch den einen Sensor definierten Koordinatensystems zum Planum, um basierernd auf der Neigungsänderung des Koordinatensystems einen ersten Vektor (9) zu bestimmen, der durch die Schichtdickenmessvorrichtung zusammen mit einem zweiten Vektor, der zu einem Punkt zeigt, welcher auf der Oberfläche (5) der neu eingebauten Schicht liegt, zur Bestimmung der Schichtdicke des Materialeinbaus verwendbar ist.

Die Erfindung ermöglicht es, die Schichtdicke des eingebauten Straßenbelags während der Fahrt des Straßenfertigers genau zu messen. Vorteilhaft ist, dass die erfindungsgemäße Schichtdickenmessvorrichtung ohne Neigungssensor zur Bestimmung der Schichtdicke auskommt. Des Weiteren sind die zur Abstandsmessung verwendeten Sensoren unempfindlich gegen Beschleunigungen des Straßenfertigers.

Außerdem ist es mittels der Erfindung möglich, eine exakte Schichtdicke des Straßenbelags zu ermitteln, ohne dabei diesen mit zusätzlichen Reflektionskörpern zu versehen. Ebenfalls sind bei der Erfindung keine externen Referenzen notwendig, die mit meist gro-ßem Aufwand entlang der Einbaustrecke positioniert werden müssen oder gegebenenfalls während der Einbaufahrt des Straßenfertigers versetzt werden müssten.

Hinzu kommt, dass die erfindungsgemäße Schichtdickenmessvorrichtung einfach und kostengünstig herstellbar ist sowie ohne großen Aufwand an unterschiedlichen Stellen am Straßenfertiger befestigt werden kann.

Durch die Erfassung der Verlagerung des Koordinatensystems kann auf einfache Art und Weise die Neigungsreferenz hergestellt werden, um daraus mittels Vektorrechnung auf einfache, unkonventionelle Art auf die Schichtdicke zu schließen. Dadurch ist es möglich, ebenso Unebenheiten in der Berechnung der Schichtdicke zu berücksichtigen. Dabei ist bei der Erfindung die Verlagerung des Koordinatensystems nicht ausschließlich auf die Verlagerung dessen Ursprungs beschränkt, sondern kann auch anhand der Verlagerung eines oder mehrerer Punkte relativ zum Koordinatenursprung dargestellt werden.

Vorzugsweise ist die Schichtdickenmessvorrichtung dazu konfiguriert, sowohl kartesische als auch Polarkoordinaten, Zylinderkoordinaten oder Kugelkoordinaten zur Berechnung der Schichtdicke zu verwenden. Um diesbezüglich die Berechnung der Schichtdicke zu ermöglichen, ist das Koordinatensystem, als kartesisches Koordinatensystem, als Kugelbeziehungsweise als Zylinderkoordinatensystem ausgebildet. Dadurch können unabhängig vom Verlauf der Einbaustrecke genaue Ergebnisse für die Schichtdickenbestimmung erzielt werden.

In einer weiteren Ausführungsform der Erfindung umfasst die Schichtdickenmessvorrichtung eine Auswerteeinheit, die die Verschiebung des verwendeten Koordinatensystems relativ zum Untergrund während der Einbaufahrt erfasst. Die Auswerteeinheit ist dazu ausgebildet, die Meßergebnisse der durch die Sensoren intervallweise durchgeführten Höhenmessung zu erfassen, um schließlich die Längs- und Höhenverschiebung aber auch die Neigungsänderung des Koordinatensystems zwischen zwei Zeitpunkten zu ermitteln. Damit ist es möglich, mittels der Auswerteeinheit während der Einbaufahrt zu einem bestimmten Zeitpunkt die Schichtdicke an einer Stelle zu erfassen, an der bereits zuvor eine Höhenmessung ausgeführt wurde und an der bereits Einbaumaterial eingearbeitet ist.

Von der Auswerteeinheit ist das Ergebnis der errechneten Schichtdicken vorzugsweise visuell und zeitecht durch ein Bedienerinterface abrufbar, welches dem Bedienpersonal des Fertigers zur Verfügung steht.

Die Schichtdickenmessvorrichtung umfasst drei (oder mehr) Sensoren. Mit den drei Sensoren kann die Schichtdickenmessvorrichtung besonders genau eine Neigungsreferenz zur Errechnung der Schichtdicke herstellen. Vorstellbar wäre es auch, mindestens zwei Sensorgruppen, jeweils umfassend mindestens zwei Sensoren, der Schichtdickenmessvorrichtung zur Verfügung zu stellen, um das Meßergebnis zusätzlich zu verbessern. Vorteilhaft ist es, wenn die mehreren Sensoren jeweils einer Sensorgruppe in Reihe entweder in Fahrtrichtung oder senkrecht zur Fahrtrichtung angeordnet sind.

Die Sensoren sind dazu ausgebildet, die intervallweise Abstandsmessung zum Planum durchzuführen. Damit wird erreicht, dass in regelmäßigen Abständen eine exakte Schichtdickenmessung abrufbar ist. Des Weiteren wäre es möglich, die Auswerteeinheit so auszubilden, dass sie mittels der Meßergebnisse der jeweiligen Sensorgruppen dazu im Stande ist, für jede Sensorgruppe einen gemittelten Abstand zu bilden, um anhand diesen die Verlagerung des Koordinatensystems zu messen. Dabei könnte die Auswerteeinheit auch dazu ausgebildet sein, dass sie extreme Höhenunterschiede aus der Ermittlung der jeweiligen Mittelwerte herausfiltert. Dadurch kann neben der Einbaustrecke herumliegendes Baustellenwerkzeug nicht das Meßergebnis negativ beeinflussen.

In einer weiteren Ausführungsform der Erfindung definiert die Schichtdickenmessvorrichtung, jedoch vorzugsweise der in Fahrtrichtung hinterste Sensor oder die hinterste Sensorgruppe der Schichtdickenmessvorrichtung das Koordinatensystem. Dadurch kann die Errechnung des ersten Vektors, aber auch die Erfassung der Verlagerung des Koordinatensystems erleichtert werden.

Die Sensoren oder Sensorgruppen sind in Fahrtrichtung äquidistant bezüglich eines Abstands zueinander angeordnet. Durch diesen Abstand kann auf einfache Art und Weise ein Maß für die intervallweise Abstandsmessung zum Planum vorgegeben werden.

Vorzugsweise ist die Schichtdickenmessvorrichtung dazu ausgebildet, die Schichtdicke an einer Stelle zu messen, die mindestens durch den Abstand oder durch ein Vielfaches des Abstands von dem Sensor zurückversetzt ist, der das Koordinatensystem definiert. Damit ist es möglich, zurückschauend die Schichtdicke an einer Stelle zu messen, die um den die Sensoren oder die Sensorgruppen trennenden Abstand oder um ein Vielfaches davon relativ zur Stelle der momentanen Höhenmessung zurückversetzt ist.

In einer weiteren Ausführungsform der Erfindung umfasst die Schichtdickenmessvorrichtung einen Träger, der starr relativ zum Straßenfertiger angeordnet ist. Der Träger kann dabei der Abdruckbalken des Zugholms oder auch ein zusätzlich verwendeter Träger sein. Vorzugsweise sind die Sensoren der Schichtdickenmessvorrichtung äquidistant an dem Träger angeordnet. Die Befestigung des Trägers direkt am Straßenfertiger hat den technischen Vorteil, dass der Träger selbst und insbesondere die daran befestigte Schichtdickenmessvorrichtung robust gelagert ist und deshalb keine oder nur wenige Erschütterungen aufnimmt, die bei der Abstandsmessung störend wirken könnten.

Alternativ dazu ist es möglich, dass die Schichtdickenmessvorrichtung eine Halterung umfasst, die starr relativ zur Einbaubohle angeordnet ist. Auch darauf, also auf der Halterung, sollten die Sensoren äquidistant angeordnet sein.

In einer weiteren Ausführungsform der Erfindung sind die Sensoren direkt an einem Zugarm angeordnet, der die Einbaubohle trägt. Im Vergleich zur Anordnung der Sensoren auf einem Träger bzw. auf einer Halterung kann dadurch das Gesamtgewicht des Straßenfertigers reduziert werden, was gleichsam zu einem reduzierten Kraftstoffverbrauch führt. Zusätzlich können durch diese Maßnahme auch die Kosten für die Messeinrichtung gesenkt werden.

Eine weitere Ausführungsform der Erfindung sieht vor, dass die Einbaubohle eine hintere Kante umfasst, deren Entfernung zur Schichtdickenmessvorrichtung, insbesondere zum das Koordinatensystem definierenden Sensor, den zweiten Vektor definiert. Die hintere Kante der Einbaubohle bildet eine verläßliche und einfache Referenz, um den zweiten Vektor zu definieren.

In einer weiteren vorteilhaften Ausführung der Erfindung umfasst die Schichtdickenmessvorrichtung einen (vierten) Sensor, der in Fahrtrichtung des Straßenfertigers gesehen in einem gewissen Abstand hinter der Einbaubohle, also der hinteren Kante nachgestellt angeordnet ist. Dieser Sensor ist vorzugsweise dazu ausgebildet, hinter der Bohle den Abstand zum frisch eingebauten Material zu messen. Der nachgelagerte Sensor führt zu einer besonders benutzerfreundlichen Ausführung, da eine Kalibrierung der Bohlenhinterkante bezogen auf das Meßsystem entfällt. Um den Zeitverzug zwischen der Erzeugung der Schicht durch die Bohle und der Ermittlung der Schichtdicke durch das Meßsystem möglichst gering zu halten, ist auf einen möglichst geringen Abstand in Fahrtrichtung zwischen der Bohlenhinterkante und dem nachgelagerten Sensor zu achten.

Wie die zuvor erwähnten Sensoren oder Sensorgruppen ist der hinter der Bohle angeordnete Sensor vorzugsweise an demselben Träger oder an derselben Halterung befestigt, wobei der Träger oder die Halterung über die Einbaubohle nach hinten ragt. Dadurch ist es möglich, den Abstand zwischen dem Sensor zum Sensor, der das Koordinatensystem definiert, konstant zu halten. Alternativ zum (vierten) Sensor ist es möglich, diesen mit mindestens einem weiteren Sensor zu ergänzen, welcher in Reihe senkrecht zur Fahrtrichtung mit dem vierten Sensor angeordnet ist. Auch damit kann, wie zuvor angesichts der Sensorgruppen beschrieben wurde, ein gemittelter Abstand zum neu eingebauten Belag mittels der Auswerteeinheit berechnet werden.

Vorzugsweise handelt es sich bei den Sensoren zur Abstandsmessung zum Planum beziehungsweise zur Oberfläche des neu eingebauten Straßenbelags um akustische und/oder optische Sensoren, insbesondere um Ultraschall- oder Lasersensoren. Dadurch ist eine berührungslose Abstandsmessung möglich.

Neben dem erfindungsgemäßen Straßenfertiger betrifft die Erfindung ein Verfahren zum Bestimmen einer Schichtdicke eines durch einen Straßenfertiger aufgebrachten Materialeinbaus auf einem Planum, wobei der Straßenfertiger eine bewegliche Einbaubohle und eine Schichtdickenmessvorrichtung trägt, die mindestens drei Sensoren umfasst, die in Fahrtrichtung (V) äquidistant bezüglich eines Abstands (L1) zueinander angeordnet sind, wobei einer der Sensoren ein Koordinatensystem definiert und die mindestens drei Sensoren im Intervall des Abstandes (L1) eine Abstandsmessung durchführen, um eine Entfernung zwischen dem jeweiligen Sensor und einem vom Sensor erfassten Punkt (P) auf der Oberfläche des Planums zu bestimmen und um darauf basierend eine Neigungsänderung des Koordinatensystems zur Errechnung einer Schichtdicke (11) zu ermitteln,
wobei die Schichtdickenmessvorrichtung basierend auf der Neigungsänderung des Koordinatensystems einen ersten Vektor zur Schichtdickenbestimmung bestimmt, indem sie eine zuvor von dem das Koordinatensystem definierenden Sensor ermittelte Entfernung vektoriell summiert mit einer durch die Fahrt des Straßenfertigers ergebenen Relativbewegung des durch den einen Sensor definierten Koordinatensystems (6) zum Planum (4), wobei die Schichtdickenmessvorrichtung den ersten Vektor mit mindestens einem zweiten Vektor, der zu einem Punkt zeigt, welcher auf der Oberfläche der neu eingebauten Schicht liegt, verrechnet, um die Schichtdicke (11) zu bestimmen.

In einer besonderen Ausführungsform werden der erste und der zweite Vektor addiert, um die Schichtdicke zu bestimmen. Durch die Vektoraddition ist es möglich, bei der berechneten Schichtdicke Neigungsänderungen effektiv zu berücksichtigen.

Durch das erfindungsgemäße Verfahren ergeben sich dieselben Vorteile, die bereits eingangs in Bezug auf den erfindungsgemäßen Straßenfertiger geschildert wurden.

Ausführungsformen des erfindungsgemäßen Gegenstands werden anhand der Zeichnungen erläutert.

Es zeigen:
- Figur 1: Eine Ausführungsform der Schichtdickenmessvorrichtung, wie sie bei der Erfindung für einen Straßenfertiger zur Ermittlung der Schichtdicke verwendet wird,
- Figur 2: Eine Position der vorteilhaften Schichtdickenmessvorrichtung aus der Figur 1 relativ zum Planum zu einem Zeitpunkt T-1 und zu einem Zeitpunkt T,
- Figur 3: Eine intervallweise Verlagerung der vorteilhaften Schichtdickenmessvorrichtung entlang der Zeitpunkte T-3, T-2, T-1 und T,
- Figur 4: Eine schematische Darstellung zur Ermittlung des ersten Vektors, welcher zur Bestimmung der Schichtdicke verwendet wird,
- Figur 5: Eine vorteilhafte Schichtdickenmessvorrichtung mit einem Träger zur Befestigung an dem Straßenfertiger,
- Figur 6: Eine vorteilhafte Schichtdickenmessvorrichtung mit einer Halterung zur Befestigung an der Einbaubohle,
- Figur 7: Eine Ausführungsform der Erfindung, bei der die Sensoren direkt an einem die Einbaubohle tragenden Zugteil befestigt sind und
- Figur 8: Eine Ausführungsform der Schichtdickenmessvorrichtung mit einem vierten Sensor, der hinter der Einbaubohle positioniert ist.

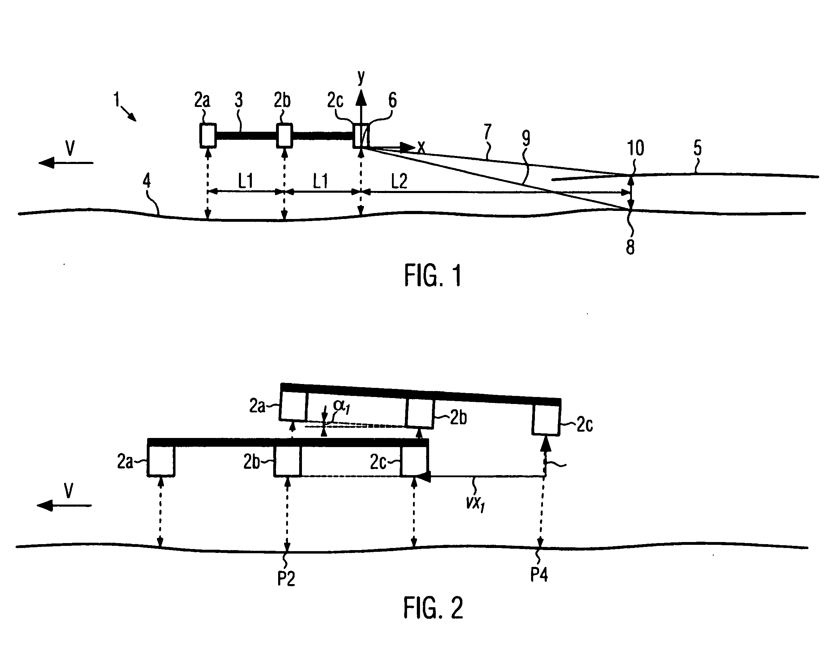

In der Figur 1 wird eine vorteilhafte Ausführungsform der Schichtdickenmessvorrichtung 1 gezeigt. Die Schichtdickenmessvorrichtung 1 umfasst drei Sensoren 2a, 2b, 2c, die äquidistant über einen Abstand L1 zueinander angeordnet sind. Die Sensoren 2a, 2b, 2c sind auf einer Halterung 3 angeordnet, welche in der Figur 1 im Wesentlichen horizontal zu einem Planum 4 dargestellt ist. In Fahrtrichtung V gesehen definiert der hinterste Sensor 2c ein Koordinatensystem 6. Das Koordinatensystem 6 umfasst eine X-Achse, die zur Halterung 3 im Wesentlichen parallel angeordnet ist, sowie eine Y-Achse, die zur Haltung 3 im Wesentlichen senkrecht angeordnet ist.

Ebenfalls zeigt die Figur 1 einen Straßenbelag mit einer Oberfläche 5, der auf dem Planum 4 eingebaut worden ist. Vom Ursprung des Koordinatensystems 6 ist ein erster Vektor 9 zu einem Punkt 8 gerichtet, der auf dem Planum 4 liegt. Außerdem zeigt ein zweiter Vektor 7 vom Ursprung des Koordinatensystems 6 zu einem Punkt 10, welcher auf der Oberfläche 5 der neu eingebauten Schicht liegt. Zwischen den Punkten 8 und 10 ist die Schichtdicke 11 des Straßenbelags gezeigt.

Außerdem geht aus der Figur 1 hervor, dass zwischen dem das Koordinatensystem 6 definierenden Sensor 2c und der zur Schichtdickenbestimmung vorgesehenen Stelle, deren Schichtdicke durch die voneinander beabstandeten Punkte 8 und 10 wiedergegeben wird, in horizontaler Projektion oder senkrecht zur Messrichtung des Sensors 2c ein Abstand L2 vorliegt. Der Abstand L2 bestimmt eine Entfernung zwischen dem Ursprung des Koordinatensystems 6 und der Stelle, an welcher die Schichtdickenmessung vorgenommen werden soll. Vorzugsweise ist der Abstand L2 gleich dem Abstand L1, oder entspricht, wie von der Figur 1 gezeigt, einem Vielfachen des Abstands L1.

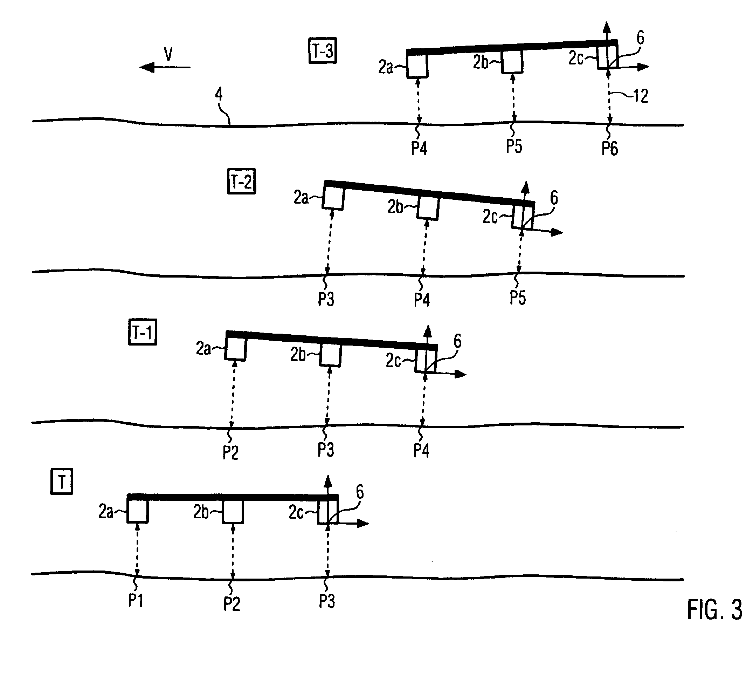

Die drei Sensoren 2a, 2b, 2c haben eine geometrisch definierte Lage zu dem Bezugskoordinatensystem 6. Durch die drei Sensoren 2a, 2b, 2c ist es möglich, intervallweise eine Abstandsmessung zum Planum 4 durchzuführen, um neben dem gefahrenen Weg und der Höhenverschiebung ebenfalls die Neigungsänderung des Bezugskoordinatensystems 6 zu unterschiedlichen Zeitpunkten T-3, T-2, T-1, T zu erfassen (siehe Figur 3).

Eine in Fahrtrichtung V gesehene Verlagerung des Bezugskoordinatensystems 6 der Schichtdickenmessvorrichtung ist zu unterschiedlichen Zeitpunkten T1 und T durch die Figur 2 dargestellt. Die Figur 2 zeigt eine Verlagerung des Bezugskoordinatensystems 6 durch eine Höhenverschiebung vy₁, eine Längsverschiebung vx₁ entlang der Fahrtrichtung V sowie eine Neigungsänderung α1. Zum Zeitpunkt T-1 erfassen die Sensoren 1a, 1b, 1 c jeweils einen Abstand zum Planum 4, der bis zu den Punkten P2, P3, P4 reicht. Zeitlich versetzt, durch eine Bewegung des Straßenfertigers in Fahrtrichtung V, verlagert sich das durch den hintersten Sensor 2c definierte Bezugskoordinatensystem 6 entlang der Höhenverschiebung vy₁ sowie entlang der Längswegverschiebung vx₁ und um den Neigungswinkel α1, wodurch die Stellung der Schichtdickenmessvorrichtung zum Zeitpunkt T resultiert. Im Zeitpunkt T ermitteln die Sensoren 2a, 2b, 2c den Abstand zum Planum 4, welcher jeweils bis zum Punkt P1, P2, P3 reicht. Dabei hat die Abstandsmessung in einem Intervall stattgefunden, welches dem Abstand zwischen der Sensoren 2a, 2b, 2c entspricht, also L1.

Die Figur 3 zeigt eine Verlagerung der Schichtdickenmessvorrichtung 1 entlang der Fahrtrichtung V zu den Zeitpunkte T-3, T-2, T-1 und T, wobei die Sensoren 2a, 2b, 2c im Intervall des Abstands L1 eine Abstandsmessung zum Planum 4 durchführen. Man kann sehen, dass sich die Schichtdickenmessvorrichtung 1, insbesondere das Bezugskoordinatensystem 6, von Intervall zu Intervall, also bei Durchlaufen des Abstands L1, unterschiedlich verlagert, was auf Unebenheiten im Planum 4, d.h. auf eine unterschiedliche Höheneinstellung der Bohle zum Ausgleich der Unebenheiten, zurückzuführen ist. Pro Intervall werden die Abstände zum Planum 4 durch die Sensoren 2a, 2b, 2c erfasst.

Die Figur 3 zeigt, dass beispielsweise der Sensor 2a zum Zeitpunkt T-1 auf denselben Punkt P2 gerichtet ist wie der Sensor 2b zum Zeitpunkt T. Diese Rechnung setzt voraus, dass lediglich kleine Neigungsänderungen während der Einbaufahrt geschehen.

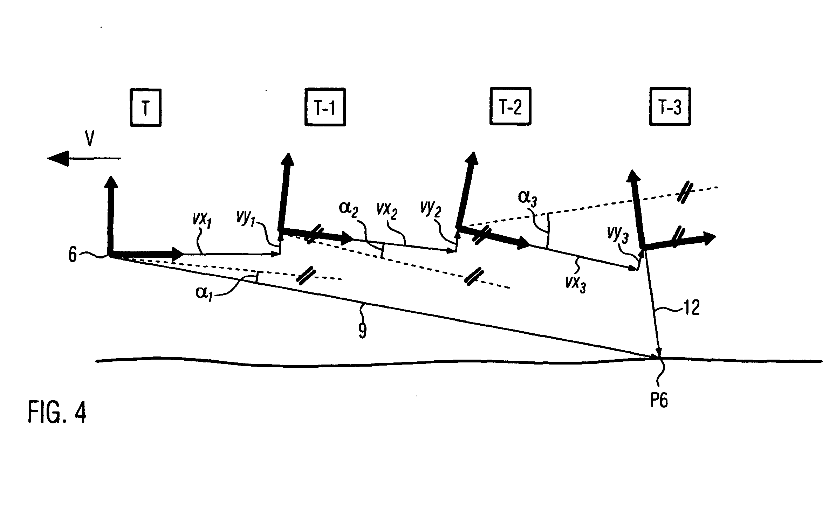

Die Verlagerung des Bezugskoordinatensystems 6 über die Zeitpunkte T-3 bis T wird vektoriell durch die Figur 4 gezeigt. Vom Bezugskoordinatensystem 6 zum Zeitpunkt T führt der Vektor 9 zum Punkt P6, welcher die in der Figur 1 gezeigte Stelle 8 kennzeichnet. Der Vektor 9 entsteht durch Transformation des zu dem zurückliegenden Zeitpunkt T-3 durch den Sensor 2c erfaßten Abstands 12 auf das zum Zeitpunkt T positionierte Bezugskoordinatensystem 6. Dies entspricht der Summe aus dem gemessenen Wert 12 zum Zeitpunkt T-3 sowie dem vektoriellen Weg über die auf das Koordinatensystem transformierten Vektoren vy₃, vx₃, vy₂, vx₂, vy₁ und vx₁. Dadurch werden die während der Fahrt geschehenen Neigungsänderungen α1, α2, α3 des Bezugskoordinatensystem 6 zur Berechnung der Schichtdicke 11 berücksichtigt. Der Vektor 9 bestimmt die Stelle 8, d.h. den Punkt P6, an dem die Schichtdicke gemessen wird.

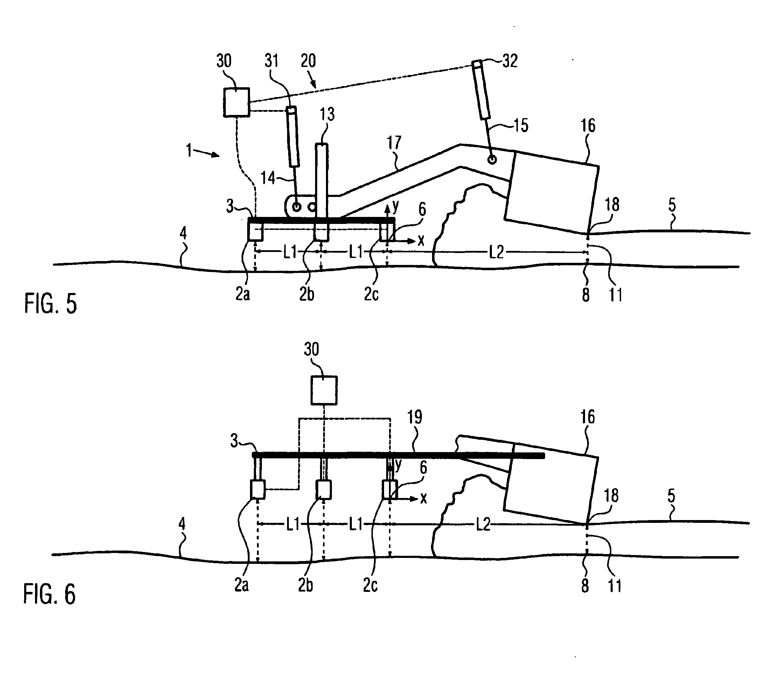

Die Figur 5 zeigt eine vorteilhafte Schichtdickenmessvorrichtung 1, die durch einen Träger 13 an einem Straßenfertiger 20, insbesondere am Chassis des Straßenfertigers 20, befestigt ist. Der Träger 13 ist senkrecht an der Halterung 3 befestigt, welche die Sensoren 2a, 2b, 2c trägt. Zum Planum 4 ist der Träger 13 im Wesentlichen vertikal ausgerichtet. Außerdem zeigt die Figur 5 einen beweglichen Zugarm 17 des Straßenfertigers 20, wobei am Zugarm 17 eine Einbaubohle 16 befestigt ist. Die Einbaubohle 16 umfasst eine hintere Kante 18, die mit der Stelle 10 zusammenläuft, wo vorzugsweise die Schichtdicke 11 ermittelt wird. Die Stelle 10 ist durch die Figur 1 dargestellt. Der Zugarm 17 ist durch Verstellzylinder 14, 15 höhenverstellbar gelagert. Die Verstellzylinder 14, 15 sind so ansteuerbar, dass es ihnen durch eine entsprechende Höhenverstellung gelingt, Unebenheiten auf dem Planum 4 so auszugleichen, dass auch dann ein ebener Straßenbelag durch die Einbaubohle 16 einbaubar ist.

Außerdem zeigt die Figur 4 eine Auswerteeinheit 30 die, wie schematisch dargestellt, mittels einer gestrichelten Linie mit den Sensoren 2a, 2b, 2c elektrisch verbunden ist, um deren Meßergebnisse zu erfassen. Des Weiteren ist die Auswerteeinheit 30 mit Sensoren 31, 32 verbunden, welche eine Stellung der Verstellzylinder 14, 15 erfassen und diese zur Ermittlung der Schichtdicke 11 an die Auswerteeinheit 30 weiterleiten. Über die Geometrie des Fertigers 20, des Zugarms 17 sowie die durch die Auswerteeinheit 30 erfaßten Positionen der Verstellzylinder 14, 15 ist es möglich, in Bezug auf das Bezugskoordinatensystem 6 die Position der hinteren Kante 18 zu ermitteln. Damit ist die Auswerteeinheit 30 in der Lage, den zweiten Vektor 7 zwischen dem Koordinatensystem 6 und der ermittelten Position der hinteren Kante 18 zu ermitteln, um diesen mit dem ersten Vektor 9 zur Schichtdicke 11 zu verrechnen.

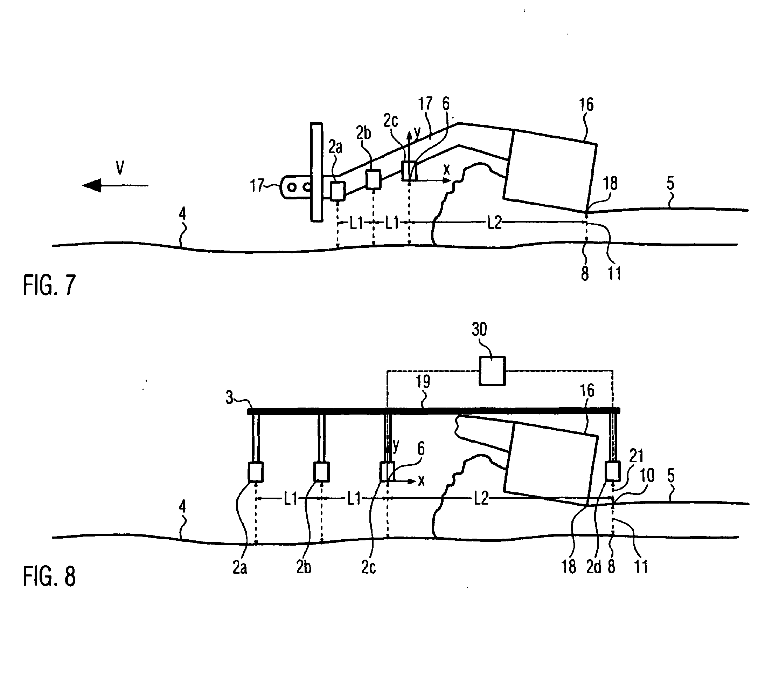

Anders als bei der Figur 5 zeigt die Figur 6 keine direkte Befestigung der Schichtdickenmessvorrichtung 1 am Straßenfertiger, sondern eine Befestigung an der Einbaubohle 16. Die Schichtdickenmessvorrichtung 1 ist durch eine Halterung 19, die aus einer Verlängerung der Halterung 3 resultiert, an der Einbaubohle 16 montiert. Aufgrund der direkten starren Anbindung der drei Sensoren 2a, 2b, 2c über die Halterung 19 an der Einbaubohle 16 ist eine Verrechnung der Position der Verstellzylinder 14, 15 nicht erforderlich, um die Schichtdicke 11 an der Stelle 10 bzw. unter der hinteren Kante 18 der Einbaubohle 16 zu ermitteln. Dabei ist die Entfernung der hinteren Kante 18 der Einbaubohle 16 in Bezug auf das Bezugskoordinatensystem 6 konstant. Analog dazu ist es möglich, ohne eine Halterung 19 auszukommen, wenn die Sensoren 2a, 2b, 2c direkt am Zugarm 17 befestigt sind. Dies ist durch die Figur 7 gezeigt. Dabei sind die Sensoren 2a, 2b, 2c am Zugarm 17 angeordnet und über den Abstand L1 voneinander getrennt. Der horizontale Abstand zwischen dem hintersten Sensor 2c und der hinteren Kante 18 beträgt L2, was einem Vielfachen des Abstands L1 entspricht.

In einer weiteren Ausführungsform gemäß der Figur 8 wird gezeigt, dass die Schichtdickenmessvorrichtung 1 zusätzlich einen vierten Sensor 2d umfasst, welcher in Fahrtrichtung V gesehen hinter der Einbaubohle 16 angeordnet ist. Die Schichtdickenmessvorrichtung 1 umfasst den Sensor 2d, um bei der Schichtdickenberechnung von der Geometrie der Einbaubohle 16 und des Straßenfertigers 20 unabhängig zu sein. Gemäß der Figur 8 wird die Schichtdicke 11 nicht unter der hinteren Kante 18 der Einbaubohle 16 ermittelt, sondern unterhalb des Sensors 2d, der relativ zum Koordinatensystem 6 in einer bekannten Lage positioniert ist. Der Sensor 2d misst einen Abstand 21 zur Oberfläche 5 der eingebauten Schicht. Mittels des Abstands 21 und der relativen Lage der Sensoren 2c, 2d ist es möglich, durch die Auswerteeinheit 30 den zweiten Vektor 7 zu bestimmen. Mit dem ersten Vektor 9 ist dann die Schichtdicke 11 errechenbar.

Die vorliegende Erfindung ermöglicht es, unter der Bedingung, dass es sich um kleine Neigungsänderungen zwischen zwei zu messenden Punkten handelt, eine Neigungsreferenz ohne Neigungssensor und mit reduziertem Sensoraufwand zu erfassen. Aufgrund der Empfindlichkeit aller Neigungssensoren auf Beschleunigungen und Vibrationen und der damit einhergehenden Ungenauigkeit entsteht somit zusätzlich ein Vorteil in der erreichbaren Genauigkeit der Dickenmessung.

## Patentansprüche

1. Straßenfertiger (20) mit einer beweglichen Einbaubohle (16) und mit einer Schichtdickenmessvorrichtung (1), die mindestens drei Sensoren (2a, 2b, 2c) umfasst, die in Fahrtrichtung (V) äquidistant bezüglich eines Abstands (L1) zueinander angeordnet sind, wobei einer der Sensoren (2a; 2b, 2c) ein Koordinatensystem (6) definiert und die mindestens drei Sensoren (2a, 2b, 2c) dazu ausgebildet sind, im Intervall des Abstandes (L1) eine Abstandsmessung zum Planum (4) durchzuführen, um eine Entfernung zwischen dem jeweiligen Sensor (2a, 2b, 2c) und einem vom Sensor (2a, 2b, 2c) erfaßten Punkt (P) auf der Oberfläche des Planums (4) zu bestimmen und um darauf basierend eine Neigungsänderung des Koordinatensystems (6) zur Errechnung einer Schichtdicke (11) zu ermitteln,
wobei die Schichtdickenmessvorrichtung (1) dazu ausgebildet ist, die von dem das Koordinatensystem (6) definierenden Sensor (2a, 2b, 2c) gemessene Entfernung zum Planum (4) vektoriell zu verrechnen mit einer durch die Fahrt des Straßenfertigers (20) ergebenen Relativbewegung des durch den einen Sensor (2a, 2b, 2c) definierten Koordinatensystems (6) zum Planum (4), um basierend auf der Neigungsänderung des Koordinatensystems (6) einen ersten Vektor (9) zu bestimmen, der durch die Schichtdickenmessvorrichtung (1) zusammen mit einem zweiten Vektor (7), der zu einem Punkt (10) zeigt, welcher auf der Oberfläche (5) der neu eingebauten Schicht liegt, zur Bestimmung der Schichtdicke (11) des Materialeinbaus verwendbar ist.

2. Straßenfertiger nach Anspruch 1, **dadurch gekennzeichnet, dass** die Schichtdickenmessvorrichtung (1) eine Auswerteeinheit (30) umfasst, die dazu ausgebildet ist, die Verschiebung des Koordinatensystems (6) zu erfassen.

3. Straßenfertiger nach einem der vorangehenden Ansprüche, **dadurch gekennzeichnet, dass** der in Fahrtrichtung hinterste Sensor (2c) das Koordinatensystem (6) definiert.

4. Straßenfertiger nach einem der vorangehenden Ansprüche, **dadurch gekennzeichnet, dass** die Schichtdickenmessvorrichtung (1) dazu ausgebildet ist, die Schichtdicke (11) an einer Stelle zu messen, die mindestens durch den Abstand (L1) oder durch ein Vielfaches des Abstands (L1) von dem Sensor (2c) entfernt ist, der das Koordinatensystem (6) definiert.

5. Straßenfertiger nach einem der vorigen Ansprüche, **dadurch gekennzeichnet, dass** die Schichtdickenmessvorrichtung (1) einen Träger (13) umfasst, der starr relativ zum Straßenfertiger (20) angeordnet ist.

6. Straßenfertiger nach einem der Ansprüche 1 bis 4, **dadurch gekennzeichnet, dass** die Schichtdickenmessvorrichtung (1) eine Halterung (19) umfasst, die starr relativ zu einer Einbaubohle (16) angeordnet ist.

7. Straßenfertiger nach Anspruch 5 oder 6, **dadurch gekennzeichnet, dass** der Träger (13) oder die Halterung (19) die durch den Abstand (L1) beabstandeten Sensoren (2a, 2b, 2c) trägt.

8. Straßenfertiger nach einem der Ansprüche 1 bis 4, **dadurch gekennzeichnet, dass** die Sensoren (2a, 2b, 2c) direkt an einem Zugarm (17) angeordnet sind, der die Einbaubohle (16) trägt.

9. Straßenfertiger nach einem der vorigen Ansprüche, **dadurch gekennzeichnet, dass** eine Einbaubohle (16) des Straßenfertigers (20) eine hintere Kante (18) umfasst, welche zusammen mit der Schichtdickenmessvorrichtung (1) den zweiten Vektor (7) definiert.

10. Straßenfertiger nach einem der Ansprüche 1 bis 8, **dadurch gekennzeichnet, dass** die Schichtdickenmessvorrichtung (1) einen Sensor (2d) umfasst, der in Fahrtrichtung (V) gesehen hinter der Einbaubohle (16) angeordnet ist.

11. Straßenfertiger nach Anspruch 10, **dadurch gekennzeichnet, dass** der Sensor (2d) zusammen mit der Schichtdickenmessvorrichtung (1) den zweiten Vektor (7) definiert.

12. Verfahren zum Bestimmen einer Schichtdicke (11) eines durch einen Straßenfertiger (20) aufgebrachten Materialeinbaus auf einem Planum (4), wobei der Straßenfertiger (20) eine bewegliche Einbaubohle (16) und eine Schichtdickenmessvorrichtung (1) trägt, die mindestens drei Sensoren (2a, 2b, 2c) umfasst, die in Fahrtrichtung (V) äquidistant bezüglich eines Abstands (L1) zueinander angeordnet sind, wobei einer der Sensoren (2a, 2b, 2c) ein Koordinatensystem (6) definiert und die mindestens drei Sensoren (2a, 2b, 2c) im Intervall des Abstandes (L1) eine Abstandsmessung durchführen, um eine Entfernung zwischen dem jeweiligen Sensor (2a, 2b, 2c) und einem vom Sensor (2a, 2b, 2c) erfassten Punkt (P) auf der Oberfläche des Planums (4) zu bestimmen und um darauf basierend eine Neigungsänderung des Koordinatensystems (6) zur Errechnung einer Schichtdicke (11) zu ermitteln,
wobei die Schichtdickenmessvorrichtung (1) basierend auf der Neigungsänderung des Koordinatensystems (6) einen ersten Vektor (9) zur Schichtdickenbestimmung bestimmt, indem sie eine zuvor von dem das Koordinatensystem (6) definierenden Sensor (2a, 2b, 2c) ermittelte Entfernung vektoriell summiert mit einer durch die Fahrt des Straßenfertigers (20) ergebenen Relativbewegung des durch den einen Sensor (2a, 2b, 2c) definierten Koordinatensystems (6) zum Planum (4), wobei die Schichtdickenmessvorrichtung (1) den ersten Vektor (9) mit mindestens einem zweiten Vektor (7), der zu einem Punkt (10) zeigt, welcher auf der Oberfläche (5) der neu eingebauten Schicht liegt, verrechnet, um die Schichtdicke (11) zu bestimmen.

## Claims

1. Road paver (20) with a movable screed (16) and with a layer thickness measuring device (1), which comprises at least three sensors (2a, 2b, 2c), wherein all of the at least three sensors (2a, 2b, 2c) are arranged equidistantly to one another in the direction of travel with respect to a distance (L1), wherein one of the sensors (2a, 2b, 2c) defines a coordinate system (6) and the at least three sensors (2a, 2b, 2c) are configured to carry out a distance measurement to the plane (4) at intervals of the distance (L1), in order to determine a distance between the respective sensor (2a, 2b, 2c) and a respective point (P) on the surface of the plane (4), said point (P) being registered by the sensor (2), and in order to determine a change of inclination of the coordinate system (6) for calculating the layer thickness, and wherein the layer thickness measuring device (1) is configured to combine as vectors the distance to the plane (4) measured by the sensor (2a, 2b, 2c) that defines the coordinate system (6) with a movement, relative to the plane (4) and caused by the driving of the road paver (20), of the coordinate system (6) defined by the one sensor (2) in order to determine based on the change of inclination of the coordinate system (6) a first vector (9) that, together with a second vector (7), pointing to a point (10) that lies on the surface (5) of the newly laid layer, can be used by the layer thickness measuring device (1) for determining the layer thickness (11) of the laying material.

2. Road paver according to Claim 1 **characterised in that** the layer thickness measuring device (1) comprises an evaluation unit (30) that is configured to register the displacement of the coordinate system (6).

3. Road paver according to one of the preceding claims **characterised in that** the rearmost sensor (2c) in the direction of travel defines the coordinate system (6).

4. Road paver according to one of the preceding claims **characterised in that** the layer thickness measuring device (1) is configured to measure the layer thickness (11) at a place that is at a distance of at least the distance (L1) or of a multiple of the distance (L1) from the sensor (2c) that defines the coordinate system (6).

5. Road paver according to one of the previous claims **characterised in that** the layer thickness measuring device (1) comprises a support (13) that is arranged rigidly relative to the road paver (20).

6. Road paver according to one of the Claims 1 to 4 **characterised in that** the layer thickness measuring device (1) comprises a holder (19) that is arranged rigidly relative to a screed (16).

7. Road paver according to Claim 5 or 6 **characterised in that** the support (13) or holder (19) supports the sensors (2a, 2b, 2c) spaced apart by the distance (L1).

8. Road paver according to one of the claims 1 to 4 **characterised in that** the sensors (2a, 2b, 2c) are arranged directly on a tow arm (17) that supports the screed (16).

9. Road paver according to one of the preceding claims **characterised in that** a screed (16) of the road paver (20) comprises a rear edge (18) which, together with the layer thickness measuring device (1), defines the second vector (7).

10. Road paver according to one of the claims 1 to 8 **characterised in that** the layer thickness measuring device (1) comprises a sensor (2d) that is arranged behind the screed (16) seen in the direction of travel (V).

11. Road paver according to Claim 10 **characterised in that** the sensor (2d) together with the layer thickness measuring device (1) defines the second vector (7).

12. Method for determining a layer thickness (11) of a laying material laid on a plane (4) by a road paver (20), wherein the road paver (20) supports a movable screed (16) and a layer thickness measuring device (1), which comprises at least three sensors, which are arranged equidistantly to one another in the direction of travel with respect to a distance (L1), wherein one of the sensors (2a, 2b, 2c) defines a coordinate system (6) and the at least three sensors (2a, 2b, 2c) carry out a distance measurement at intervals of the distance (L1), in order to determine a distance between the respective sensor (2a, 2b, 2c) and a respective point (P) on the surface of the plane (4), said point (P) being registered by the sensor (2a, 2b, 2c), and in order to determine a change of inclination of the coordinate system (6) for calculating the layer thickness (11), and wherein the layer thickness measuring device (1) determines a first vector (9) based on the change of inclination of the coordinate system (6) for determining the layer thickness (11) in that it adds as vectors a distance previously determined by the sensor that defines the coordinate system (6) with a movement, relative to the plane (4) and caused by the driving of the road paver (20), of the coordinate system (6) defined by the one sensor, wherein the layer thickness measuring device (1) adds the first vector (9) to at least a second vector (7) pointing to a point (10) that lies on the surface (5) of the newly laid layer, in order to determine the layer thickness (11).

## Revendications

1. Finisseur de route (20) comprenant une table de finisseur (16) mobile et un dispositif de mesure d'épaisseur de couche (1) comportant au moins trois capteurs (2a, 2b, 2c), qui, dans le sens de marche (V), sont agencés de manière équidistante les uns par rapport aux autres en ce qui concerne une distance d'espacement mutuel (L1), l'un des capteurs (2a, 2b, 2c) définissant un système de coordonnées (6) et lesdits au moins trois capteurs (2a, 2b, 2c) étant conçus pour effectuer, selon l'intervalle de la distance d'espacement (L1), une mesure de distance à la plateforme de chaussée (4), en vue de déterminer une distance d'éloignement entre le capteur (2a, 2b, 2c) respectivement considéré et un point (P) relevé par le capteur (2a, 2b, 2c) sur la surface de la plateforme de chaussée (4), et, en se basant sur ceci, de déterminer une variation d'inclinaison du système de coordonnées (6) pour le calcul d'une épaisseur de couche (11), finisseur de route
dans lequel le dispositif de mesure d'épaisseur de couche (1) est conçu pour combiner par calcul vectoriel la distance d'éloignement à la plateforme de chaussée (4), mesurée par le capteur (2a, 2b, 2c) définissant le système de coordonnées (6), avec un mouvement relatif, qui résulte de la marche du finisseur de route (20), du système de coordonnées (6) défini par ledit un capteur (2a, 2b, 2c), par rapport à la plateforme de chaussée (4), pour déterminer, en se basant sur la variation d'inclinaison du système de coordonnées (6), un premier vecteur (9) pouvant être utilisé par le dispositif de mesure d'épaisseur de couche (1) en commun avec un autre vecteur (7), qui pointe vers un point (10) se situant sur la surface (5) de la couche nouvellement appliquée, en vue de déterminer l'épaisseur de couche (11) du matériau appliqué ou déposé.

2. Finisseur de route selon la revendication 1, **caractérisé en ce que** le dispositif de mesure d'épaisseur de couche (1) comprend une unité de traitement de données (30), qui est conçue pour relever la translation du système de coordonnées (6).

3. Finisseur de route selon l'une des revendications précédentes, **caractérisé en ce que** le capteur (2c) situé le plus à l'arrière en se référant au sens de marche, définit le système de coordonnées (6).

4. Finisseur de route selon l'une des revendications précédentes, **caractérisé en ce que** le dispositif de mesure d'épaisseur de couche (1) est conçu pour mesurer l'épaisseur de couche (11) en un endroit, qui est éloigné du capteur (2c) définissant le système de coordonnées (6), d'une distance au moins égale à la distance d'espacement (L1) ou à un multiple de la distance d'espacement (L1).

5. Finisseur de route selon l'une des revendications précédentes, **caractérisé en ce que** le dispositif de mesure d'épaisseur de couche (1) comprend un élément porteur (13), qui est agencé de manière fixe par rapport au finisseur de route (20).

6. Finisseur de route selon l'une des revendications 1 à 4, **caractérisé en ce que** le dispositif de mesure d'épaisseur de couche (1) comprend un support de maintien (19), qui est agencé de manière fixe par rapport à une table de finisseur (16).

7. Finisseur de route selon la revendication 5 ou la revendication 6, **caractérisé en ce que** l'élément porteur (13) ou le support de maintien (19) porte les capteurs (2a, 2b, 2c) espacés les uns des autres selon la distance d'espacement (L1).

8. Finisseur de route selon l'une des revendications 1 à 4, **caractérisé en ce que** les capteurs (2a, 2b, 2c) sont agencés directement sur un bras de traction (17), qui porte la table de finisseur (16).

9. Finisseur de route selon l'une des revendications précédentes, **caractérisé en ce qu'**une table de finisseur (16) du finisseur de route (20) présente une arête de bordure arrière (18), qui définit, en commun avec le dispositif de mesure d'épaisseur de couche (1), le deuxième vecteur (7).

10. Finisseur de route selon l'une des revendications 1 à 8, **caractérisé en ce que** le dispositif de mesure d'épaisseur de couche (1) comprend un capteur (2d), qui est agencé derrière la table de finisseur (16), en se référant au sens de marche (V).

11. Finisseur de route selon la revendication 10, **caractérisé en ce que** le capteur (2d) définit, en commun avec le dispositif de mesure d'épaisseur de couche (1), le deuxième vecteur (7).

12. Procédé pour déterminer une épaisseur de couche (11) d'un dépôt de matériau appliqué par un finisseur de route (20) sur une plateforme de chaussée (4), le finisseur de route (20) comprenant une table de finisseur (16) mobile et un dispositif de mesure d'épaisseur de couche (1) comportant au moins trois capteurs (2a, 2b, 2c), qui, dans le sens de marche (V), sont agencés de manière équidistante les uns par rapport aux autres en ce qui concerne une distance d'espacement mutuel (L1), l'un des capteurs (2a, 2b, 2c) définissant un système de coordonnées (6) et lesdits au moins trois capteurs (2a, 2b, 2c) effectuant, selon l'intervalle de la distance d'espacement (L1), une mesure de distance, en vue de déterminer une distance d'éloignement entre le capteur (2a, 2b, 2c) respectivement considéré et un point (P) relevé par le capteur (2a, 2b, 2c) sur la surface de la plateforme de chaussée (4), et, en se basant sur ceci, de déterminer une variation d'inclinaison du système de coordonnées (6) pour le calcul d'une épaisseur de couche (11), procédé selon lequel le dispositif de mesure d'épaisseur de couche (1), en se basant sur la variation d'inclinaison du système de coordonnées (6), détermine un premier vecteur (9) pour la détermination de l'épaisseur de couche, en réalisant la somme vectorielle d'une distance d'éloignement déterminée auparavant par le capteur (2a, 2b, 2c) définissant le système de coordonnées (6), avec un mouvement relatif, qui résulte de la marche du finisseur de route (20), du système de coordonnées (6) défini par ledit un capteur (2a, 2b, 2c), par rapport à la plateforme de chaussée (4), le dispositif de mesure d'épaisseur de couche (1) combinant par calcul le premier vecteur (9) avec au moins un deuxième vecteur (7), qui pointe en direction d'un point (10) se situant sur la surface (5) de la couche nouvellement appliquée, en vue de déterminer l'épaisseur de couche (11).
